# EUROPEAN PATENT SPECIFICATION

(11) **EP 2 077 667 B1**
(45) Date of publication and mention of the grant of the patent: **25.07.2012**
(21) Application number: 07829185.3
(22) Date of filing: 04.10.2007
(51) Int. Cl.: H04N 7/18, B60R 1/06, G06T 1/00, B60R 1/00, G06T 11/00, G06T 3/00

(54) **VIDEO DISPLAY APPARATUS AND VIDEO DISPLAY METHOD**
VIDEOANZEIGEVORRICHTUNG UND VIDEOANZEIGEVERFAHREN
APPAREIL ET PROCÉDÉ D'AFFICHAGE VIDÉO

(30) Priority: 11.10.2006 JP 2006277535
(43) Date of publication of application: 08.07.2009
(73) Proprietor: Panasonic Corporation, Kadoma-shi Osaka 571-8501 (JP)
(72) Inventor: MATSUO, Masatoshi C/o Panasonic Corporation Intellectual Property Rights Operations Company, Osaka 540-6207 (JP); FUCHIGAMI, Ikuo C/o Panasonic Corporation Intellectual Property Rights Operations Company, Osaka 540-6207 (JP)
(74) Representative: Gassner, Wolfgang
(86) International application number: PCT/JP2007/069447
(87) International publication number: WO 2008/044589

(56) References cited:
- EP-A1- 1 641 268
- JP-A- 2003 023 553
- JP-A- 2005 198 160
- JP-A- 2006 100 965
- JP-A- 2006 135 797
- JP-A- 2006 229 789
- US-A1- 2005 174 429

## Description

### TECHNICAL FIELD

The present invention relates to a video display apparatus for displaying the state of the periphery of a moving device (e.g., a vehicle), which may be the blind spots of a driver, by combining the videos of a plurality of cameras, and for thus assisting the driver's steering.

### BACKGROUND ART

A conventional video display apparatus for driving assistance reduces blind spots by clipping some portions of the videos of a plurality of cameras and displaying the clipped portions in one display monitor at the same time (see Patent Document 1, for example). FIG. 21 is a block diagram showing the structure of the conventional video display apparatus disclosed in Patent Document 1.

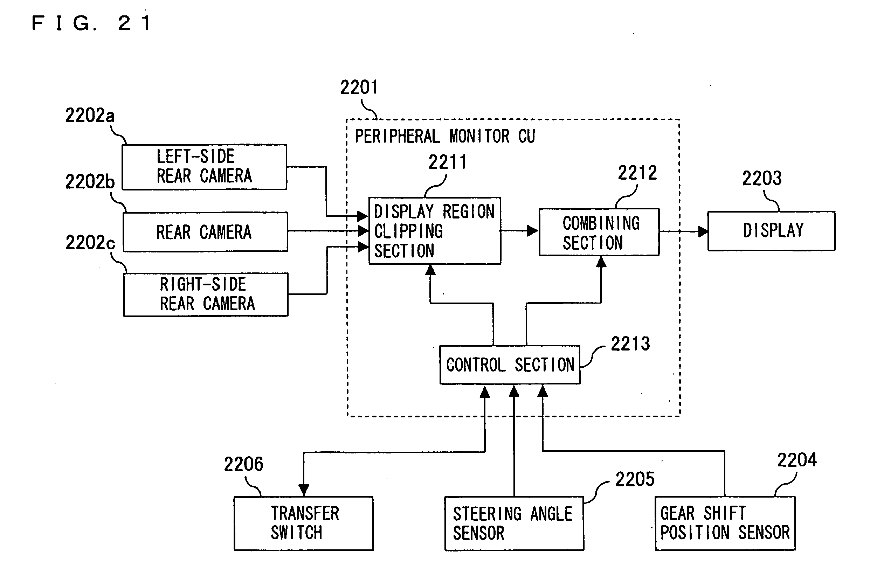

Referring to FIG. 21, a left-side rear camera 2202a, a rear camera 2202b, and a right-side rear camera 2202c capture the videos of the periphery of a vehicle. In accordance with information from a gear shift position sensor 2204, a steering angle sensor 2205, and a transfer switch 2206, a control section 2213 clips videos of display regions from the videos of the left-side rear camera 2202a, the rear camera 2202b, and the right-side rear camera 2202c, using a display range clipping section 2211. Then, a combining section 2212 combines a plurality of the clipped videos in one display screen, and the combined video is displayed in a display 2203.

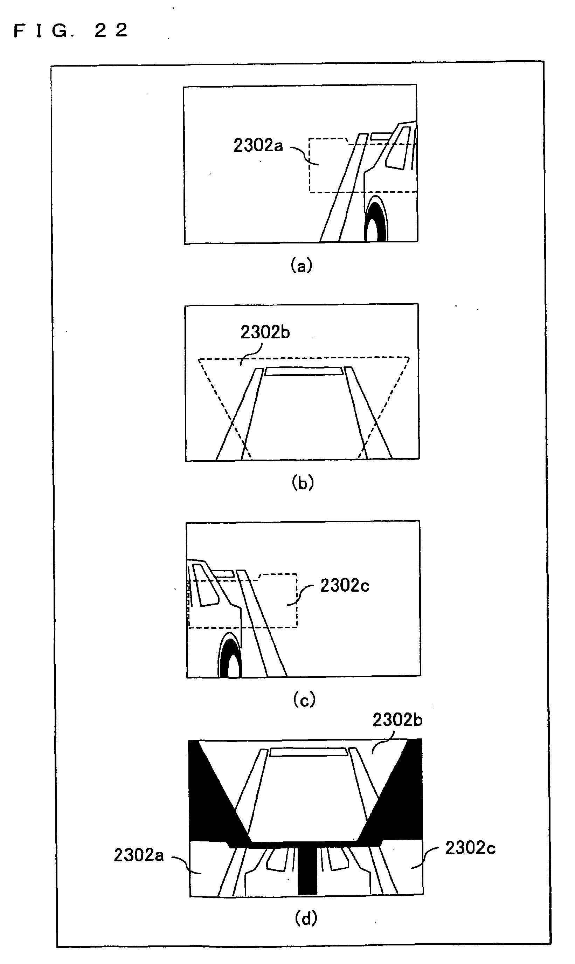

FIG. 22 is a diagram illustrating video processing performed by the conventional video display apparatus. (a) of FIG. 22 shows the video of the left-side rear camera 2202a, and a clipping area 2302a represents the portion to be clipped for screen display. (b) of FIG. 22 shows the video of the rear camera 2202b, and a clipping area 2302b represents the portion to be clipped for screen display. (c) of FIG. 22 shows the video of the rear camera 2202c, and a clipping area 2302c represents the portion to be clipped for screen display. (d) of FIG. 22 shows a video into which the plurality of videos clipped from the videos of all of the cameras are combined to be displayed in the display 2203. As shown in (a), (b), (c), and (d) of FIG. 22, the conventional video display apparatus combines the plurality of videos clipped from all of the cameras and displays the combined video in the display 2203.
Patent Document 1: Japanese Laid-Open Patent Publication No. 2005-223524

EP 1 641 268 A1 discloses a monitoring system to which camera images shot by a plurality of cameras are input, comprising: an image synthesis section for generating a synthetic image showing a state of a monitoring region by synthesizing the camera images; and a moving object detection section for detecting, in the synthetic image, a moving object region estimated as a region where a moving object is present.

### DISCLOSURE OF THE INVENTION

### PROBLEMS TO BE SOLVED BY THE INVENTION

The conventional video display apparatus of FIG. 21, however, obtains a necessary region for display with respect to the video of each camera, clips a video of the display region from the video of each camera, combines the clipped videos, and displays the combined video in the display 2203. Consequently, as shown in (a), (b), and (c) of FIG. 22, since it is necessary to perform a process of obtaining a necessary region for display with respect to the video of each camera in such a manner that the region of the video clipped from the video of each camera is not a simple rectangle and these regions are different in size, the processing becomes complicated. Further, as shown in (d) of FIG. 22, since a plurality of the videos clipped from the videos of all of the cameras are displayed in the display 2203, it is difficult to understand the correlations between the displayed videos of all of the cameras.

Therefore, an object of the present invention is to solve the conventional problem described above, and is to provide a video display apparatus for generating a video for driving assistance for a driver by combining, by a simple process, the videos of a plurality of capturing sections for capturing the periphery of a vehicle, and for thus assisting the driver's steering with an intuitively operable video provided.

### SOLUTION TO THE PROBLEMS

The present invention is directed to a video display apparatus for displaying on a monitor videos captured using a plurality of capturing sections. To achieve the above object, the video display apparatus of the present invention includes: one or more reference position setting sections for setting a position as a video construction reference position; one or more video construction reference position information adding sections for adding information regarding the video construction reference position, set by the reference position setting sections, to the videos captured by the plurality of capturing sections; a video constructing section for combining the videos captured by the plurality of capturing sections so that the video construction reference positions added by the video construction reference position information adding sections overlap each other, and for thus generating a wide-region video; a display area specifying section for specifying a display area, for display on the monitor, from the wide-region video generated by the video constructing section; and a display video generating section for clipping a video of the display area, specified by the display area specifying section, from the wide-region video generated by the video constructing section and outputting the clipped video to the monitor for display.

Consequently, the video display apparatus can combine the videos captured by the plurality of capturing sections by a simple method and thus generate the wide-region video. Additionally, since the video to be displayed on the monitor is displayed after being clipped from the generated wide-region video, it is possible to provide a video easily understandable to a driver.

The wide-region video is a video capturing a wider region than a region of the video captured using any one capturing section of the plurality of capturing sections. Further, the display area specifying section specifies the display area, for display on the monitor, from the wide-region video so that the video construction reference position added to the wide-region video is a center of the display area.

Further, the video display apparatus may further include a steering angle detecting section for detecting a steering angle of a moving device. In this case, the reference position setting sections change the video construction reference position in accordance with the steering angle of the moving device detected by the steering angle detecting section.

Further, when combining the videos captured by the capturing sections, the video constructing section combines the videos captured by the capturing sections so that the closer the video construction reference position added to the video is to a center of the video, the higher is a layer of the video.

It is preferable that the video construction reference position be set as a focus monitor position determined based on installation conditions of the capturing sections and an assumed viewpoint for viewing the videos captured by the capturing sections.

Further, the video construction reference position may be arbitrarily determined by an operator of the moving device with reference to the video outputted to the monitor by the display video generating section.

Further, the present invention is directed to a video display method of displaying on a monitor videos captured using a plurality of capturing sections. To achieve the above object, the video display method of the present invention includes: a step of setting a position as a video construction reference position; a step of adding information regarding the video construction reference position to the videos captured by the plurality of capturing sections; a step of combining the videos captured by the plurality of capturing sections so that the added video construction reference positions overlap each other, and of thus generating a wide-region video; a step of specifying a display area, for display on the monitor, from the generated wide-region video; and a step of clipping a video of the specified display area from the wide-region video and outputting the clipped video to the monitor for display.

Further, the present invention is also directed to a storage medium having stored therein a program for displaying on a monitor videos captured using a plurality of capturing sections. To achieve the above object, the program of the present invention includes: a step of setting a position as a video construction reference position; a step of adding information regarding the video construction reference position to the videos captured by the plurality of capturing sections; a step of combining the videos captured by the plurality of capturing sections so that the added video construction reference positions overlap each other, and of thus generating a wide-region video; a step of specifying a display area, for display on the monitor, from the generated wide-region video; and a step of clipping a video of the specified display area from the wide-region video and outputting the clipped video to the monitor for display.

### EFFECT OF THE INVENTION

Based on the video display apparatus of the present invention, it is possible to display on a monitor a video that is easily understandable to a user by a simple method. Further, based on the video display apparatus of the present invention, a video construction reference position may be changed in accordance with the steering angle of a moving device, whereby it is possible to display video information adapted for a driver' s steering to the driver in an easily understandable manner. Consequently, the video display apparatus can provide the driver with intuitively operable video information.

### BRIEF DESCRIPTION OF THE DRAWINGS

[FIG. 1] FIG. 1 is a block diagram showing the structure of a video display apparatus according to a first embodiment of the present invention.
[FIG. 2] FIG. 2 is a diagram showing the relations between the installation conditions of a plurality of capturing sections 101a - 101n in a vehicle 201 and video construction reference positions.
[FIG. 3] FIG. 3 is a diagram showing the relations between the installation conditions of rear-monitoring cameras 203a, 203b, and 203c in the vehicle 201 and the videos obtained from the respective cameras.
[FIG. 4] FIG. 4 is a diagram illustrating a process of combining all of the videos obtained from the cameras 203a, 203b, and 203c.
[FIG. 5] FIG. 5 is a diagram illustrating a process of clipping a video of a display area from a wide-region video generated by a video constructing section 104.
[FIG. 6] FIG. 6 is a flow chart showing an example of the operation of the video display apparatus according to the first embodiment of the present invention.
[FIG. 7] FIG. 7 is a diagram showing the relations between the installation conditions of the rear-monitoring cameras 203a, 203b, and 203c in the vehicle 201 and the videos obtained from the respective cameras.
[FIG. 8] FIG. 8 is a diagram illustrating a process of combining all of the videos obtained from the cameras 203a, 203b, and 203c.
[FIG. 9] FIG. 9 is a diagram illustrating a process performed in the case where a video cannot be obtained when the camera 203a is broken.
[FIG. 10] FIG. 10 is a diagram illustrating the process performed in the case where a video cannot be obtained when the camera 203a is broken.
[FIG. 11] FIG. 11 is a block diagram showing the structure of a video display apparatus according to a second embodiment of the present invention.
[FIG. 12] FIG. 12 is a diagram showing the relations between: the installation conditions of the rear-monitoring cameras 203a, 203b, and 203c in the vehicle 201 and a steering angle; and the videos obtained from the respective cameras.
[FIG. 13] FIG. 13 is a diagram illustrating a method of combining all of the videos obtained from the cameras 203a, 203b, and 203c.
[FIG. 14] FIG. 14 is a diagram illustrating a method of combining the videos in the case where a video construction reference position 221b is absent within the video obtained from the camera 203c.
[FIG. 15] FIG. 15 is a diagram showing the relations between the installation conditions of the rear-monitoring cameras 203a, 203b, and 203c in the vehicle 201 and the videos obtained from the respective cameras.
[FIG. 16] FIG. 16 is a diagram illustrating a process of combining all of the videos obtained from the cameras 203a, 203b, and 203c.
[FIG. 17] FIG. 17 is a diagram showing an example of the videos different from those of FIG. 14.
[FIG. 18] FIG. 18 is a diagram illustrating a process performed in the case where a video cannot be obtained when the camera 203a is broken.
[FIG. 19] FIG. 19 is a diagram illustrating the process performed in the case where a video cannot be obtained when the camera 203a is broken.
[FIG. 20] FIG. 20 is a diagram illustrating the process performed in the case where a video cannot be obtained when the camera 203a is broken.
[FIG. 21] FIG. 21 is a block diagram showing the structure of a conventional video display apparatus.
[FIG. 22] FIG. 22 is a diagram illustrating video processing performed by the conventional video display apparatus.

### DESCRIPTION OF THE REFERENCE CHARACTERS

101a, 101b, 101n capturing section
102a, 102b, 102n reference position setting section
103a, 103b, 103n video construction reference position information adding section
104 video constructing section
105 display area specifying section
106 display video generating section
107 video display section
108 steering angle detecting section
109 video construction reference position correcting section
110 video display control section
111 moving direction detecting section
201 vehicle
202 steering reference line
203a, 203b, 203c, 203d, 203e, 203f, 203g, 203h camera
205 predetermined changing line
210a, 210b driver
211a, 211b assumed viewpoint of driver
220a, 220b, 221a, 221b video construction reference position
2201 peripheral monitor control unit
2202a left-side rear camera
2202b rear camera
2202c right-side rear camera
2203 display
2204 gear shift position sensor
2205 steering angle sensor
2206 transfer switch
2211 display region clipping section
2212 video combining section
2213 control section
2302a video clipping area of left-side rear camera
2302b video clipping area of rear camera
2302c video clipping area of right-side rear camera

### BEST MODE FOR CARRYING OUT THE INVENTION

With reference to the drawings, each embodiment of the present invention will be described below.

### (First Embodiment)

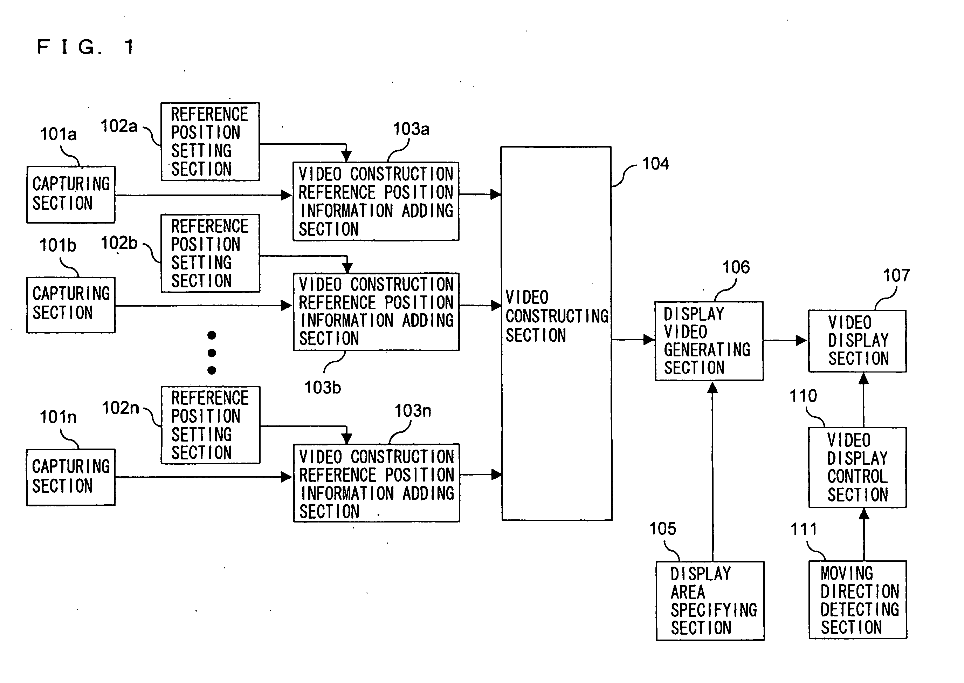

FIG. 1 is a block diagram showing the structure of a video display apparatus according to a first embodiment of the present invention. Referring to FIG. 1, the video display apparatus includes a plurality of capturing sections 101a - 101n, a plurality of reference position setting sections 102a - 102n, a plurality of video construction reference position information adding sections 103a - 103n, a video constructing section 104, a display area specifying section 105, a display video generating section 106, a video display section 107, a video display control section 110, and a moving direction detecting section 111. Note that the video display apparatus itself does not necessarily have the plurality of capturing sections 101a - 101n, and may use a plurality of capturing sections included in an external device. Further, in the video display apparatus, the number of the plurality of reference position setting sections 102a - 102n and the number of the plurality of video construction reference position information adding sections 103a - 103n are not necessarily the same as the number of the plurality of capturing sections 101a - 101n, and may be arbitrary numbers.

The plurality of capturing sections 101a - 101n capture the videos of the periphery of a moving device (e.g., a vehicle). The plurality of reference position setting sections 102a - 102n set a predetermined position as a focus monitor position. Here, the focus monitor position is a position to be monitored in a focused manner using the plurality of capturing sections 101a - 101n, and is used as the reference for combining the videos captured by the plurality of capturing sections 101a - 101n. The focus monitor position is set based on, for example, the installation positions of the capturing sections 101a - 101n and an assumed viewpoint of the driver. For example, the focus monitor position is provided as information regarding the distances from the capturing sections 101a - 101n (102a - 102n) (or the distance from the vehicle), the height from the surface of the ground, and the like. Hereinafter, the focus monitor position will be referred to as a video construction reference position.

The plurality of video construction reference position information adding sections 103a - 103n add information regarding the video construction reference position, set by the plurality of reference position setting sections 102a - 102n, to all of the videos captured by the capturing sections 101a - 101n, respectively, and thus output the resultant videos to the video constructing section 104. The video constructing section 104 generates a combined video by combining the videos captured by the plurality of capturing sections 101a - 101n so that all of the added video construction reference positions overlap each other. Since the combined video is a video capturing a wider region than that of the video captured by any one capturing section of the plurality of capturing sections 101a - 101n, hereinafter the combined video will be referred to as a wide-region video.

Based on the size of a display monitor or a display area changing operation of the driver, the display area specifying section 105 specifies a display area, on the monitor, of the wide-region video generated by the video constructing section 104. The display video generating section 106 clips a video of the display area, specified by the display area specifying section 105, from the wide-region video generated by the video constructing section 104 and outputs the clipped video to the video display section 107. As instructed by the video display control section 110, the video display section 107 outputs the video received from the display video generating section 106 to the monitor for display. In accordance with the moving direction of the vehicle detected by the moving direction detecting section 111, the video display control section 110 controls whether or not the video received from the display video generating section 106 is to be flipped horizontally.

Based on this structure, it is possible to obtain the wide-region video by the plurality of capturing sections 101a - 101n capturing the periphery of the vehicle, and thus reduce the blind spots of the driver by displaying the obtained video to the driver in an easily understandable manner.

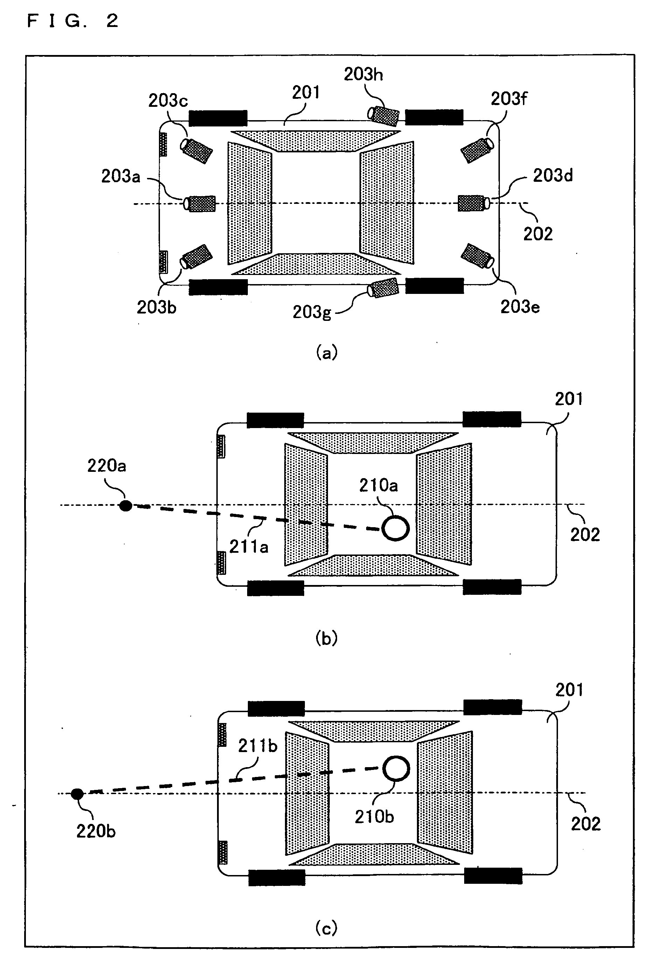

The video display apparatus according to the present embodiment will be described in detail below.
In the video display apparatus, the plurality of capturing sections 101a - 101n capture the state of the periphery of a moving device (e. g. , a vehicle) as videos. With the plurality of capturing sections 101a - 101n provided, it is possible to obtain a wide-region video of the periphery of the vehicle and thus reduce blind spots. FIG. 2 is a diagram showing the relations between the installation conditions of the plurality of capturing sections 101a - 101n in a vehicle 201 and video construction reference positions. (a) of FIG. 2 shows an example of the installations of the capturing sections 101a - 101n in the vehicle 201. Referring to (a) of FIG. 2, cameras 203a, 203b, and 203c are installed as capturing sections for monitoring the rear direction of the vehicle 201, and cameras 203d, 203e, and 203f are installed as capturing sections for monitoring the forward direction of the vehicle 201. Cameras 203g and 203h are installed as capturing sections for monitoring the side direction.

With a plurality of these cameras 203a, 203b, 203c, 203d, 203e, 203f, 203g, and 203h, it is possible to obtain the wide-region video of the periphery of the vehicle 201. The reference position setting sections 102a - 102n set a focus monitor position (i.e., a video construction reference position) at any position on a line (hereinafter referred to as a steering reference line) extending, from a position on a moving device (e.g. a vehicle) that is the reference for the moving direction of the vehicle, in the direction in which the drive force for moving acts. Note that the video construction reference position is not necessarily set at a position on the steering reference line, and for example, the video construction reference position may be set at a position other than that on the steering reference line, depending on the installation positions of the capturing sections 101a - 101n, an assumed viewpoint, the driver's operation, and the like.

(b) and (c) of FIG. 2 show examples of the setting of the video construction reference position of the vehicle 201. (b) of FIG. 2 shows an example of the case of a right-hand drive vehicle, in which a position to be monitored in a focused manner in the videos obtained based on the heights and the angles of the installation positions of the cameras taking a viewpoint 211a from a driver 210a into account is initialized as a video construction reference position 220a on a steering reference line 202 of the vehicle 201. (c) of FIG. 2 shows an example of the case of a left-hand drive vehicle, in which the shape of the vehicle and the heights and the angles of the installation positions of the cameras are different from those of (b) of FIG. 2. Similarly to (b) of FIG. 2, a position to be monitored in a focused manner in the videos obtained based on the heights and the angles of the installation positions of the cameras taking a viewpoint 211b from a driver 210b into account is initialized as a video construction reference position 220b.

The plurality of video construction reference position information adding sections 103a - 103n add information regarding the video construction reference position, set by the plurality of reference position setting sections 102a - 102n, to all of the videos captured by the capturing sections 101a - 101n, respectively. Note that the added information is, for example, information representing the position to which the video construction reference position corresponds in the video obtained from each capturing section, as a coordinate position on the video.

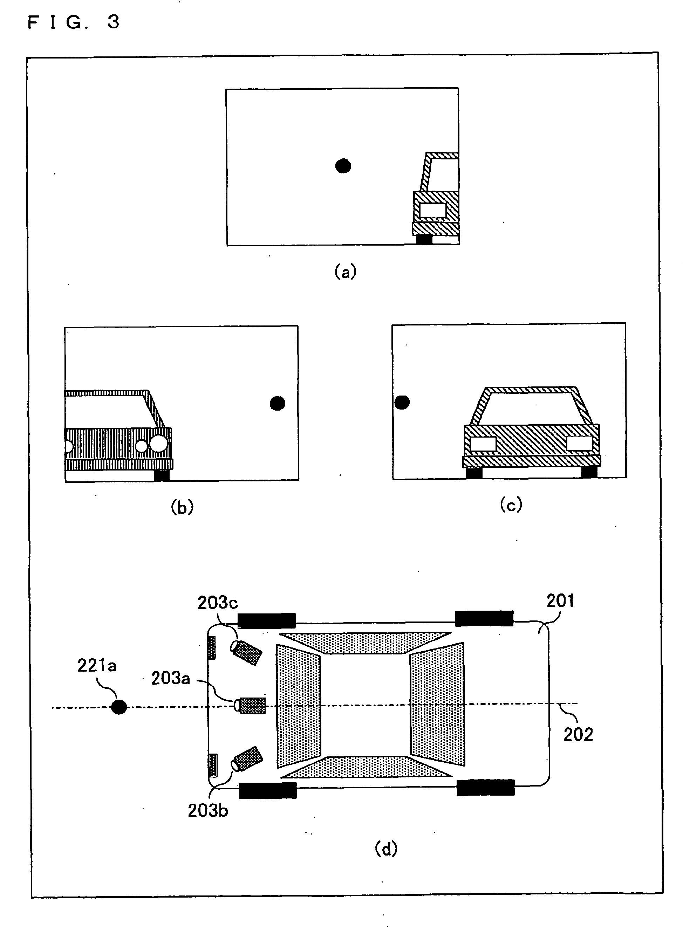

FIG. 3 is a diagram showing the relations between the installation conditions of the rear-monitoring cameras 203a, 203b, and 203c in the vehicle 201 and the videos obtained from the respective cameras. (a), (b), and (c) of FIG. 3 conceptually show the videos obtained by adding position information regarding the video construction reference position to the videos captured by the respective cameras. (a) of FIG. 3 shows the video of the camera 203a, (b) of FIG. 3 shows the video of the camera 203b, and (c) of FIG. 3 shows the video of the camera 203c. (d) of FIG. 3 shows an example of the setting of the rear-monitoring cameras 203a, 203b, and 203c in the vehicle 201. Note that although filled circles represent the video construction reference position in the figures, not filled circles but coordinate information corresponding to filled circles is added to the actual videos.

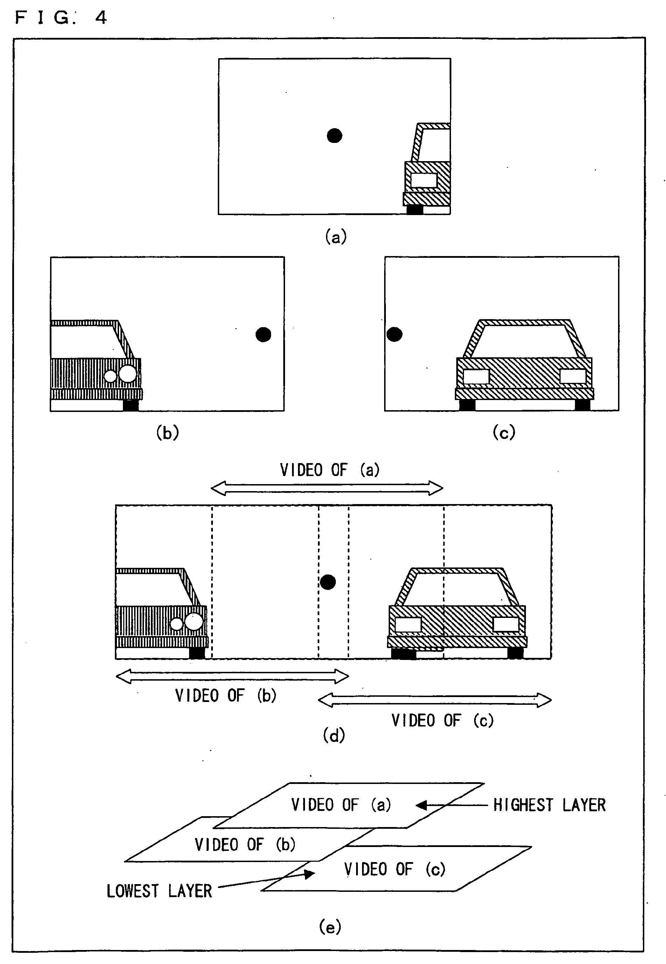

The video constructing section 104 combines all of the videos captured by the capturing sections 101a - 101n so that the video construction reference positions added by the video construction reference position information adding sections 103a - 103n overlap each other, and thus generates a wide-region video. FIG. 4 is a diagram illustrating a process of combining all of the videos obtained from the cameras 203a, 203b, and 203c. (a), (b), and (c) of FIG. 4 are the same as (a), (b), and (c) of FIG. 3, respectively. The video constructing section 104 combines the plurality of these videos so that the video construction reference positions added to the plurality of these videos overlap each other. (d) of FIG. 4 shows the combined video, from which the wide-region video can be obtained.

The video constructing section 104 combines the videos captured by the cameras 203a, 203b, and 203c so that, as shown in (e) of FIG. 4, the closer the video construction reference position is to the center of the video, the higher is the layer of the video. Based on this method, it is possible to select the video of an optimal camera as the video of the position to be monitored in a focused manner, and it is also possible to simplify the process of combining videos.

Based on the size of a display monitor installed in the vehicle 201 or a display area changing operation of the driver, the display area specifying section 105 sets a display area of the wide-region video generated by the video constructing section 104. Specifically, the display area specifying section 105 specifies the position and the size of the display area of the wide-region video generated by the video constructing section 104, as display area information.

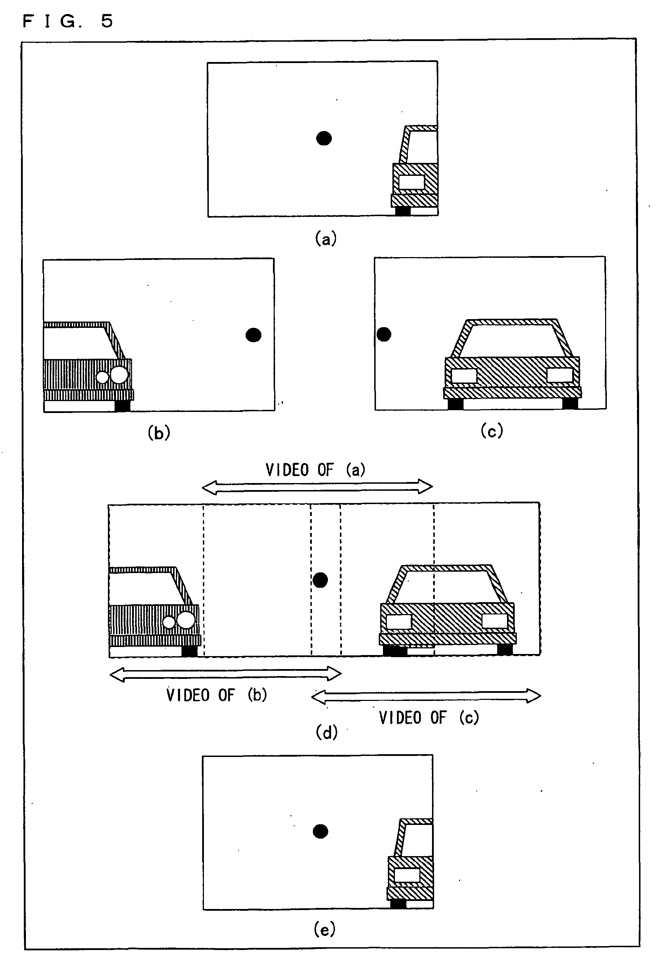

In accordance with the display area information specified by the display area specifying section 105, the display video generating section 106 clips a video of the display area from the wide-region video generated by the video constructing section 104 and thus generates a video to be displayed on the monitor. FIG. 5 is a diagram illustrating a process of clipping a video of the display area from the wide-region video generated by the video constructing section 104. Note that (a), (b), (c), and (d) of FIG. 5 are the same as (a), (b), (c), and (d) of FIG. 4, respectively. (e) of FIG. 5 shows the video generated after clipping a video of the display area from the wide-region video generated by the video constructing section 104. In this example, a video of the display area is clipped so that the video construction reference position is the center of the clipped video.

The moving direction detecting section 111 detects the moving direction of the vehicle 201 by a sensor, moving direction setting device (gear) information, or the like, and outputs the resultant information to the video display control section 110. In accordance with the information obtained by the detection of the moving direction detecting section 111, the video display control section 110 determines whether or not the video is to be flipped horizontally, and also controls the adjustments of the brightness of video and the like by a sensor or the driver's setting. The video display section 107 performs image processing on the video, received from the display video generating section 106, as instructed by the video display control section 110, and outputs the resultant video to the monitor for display.

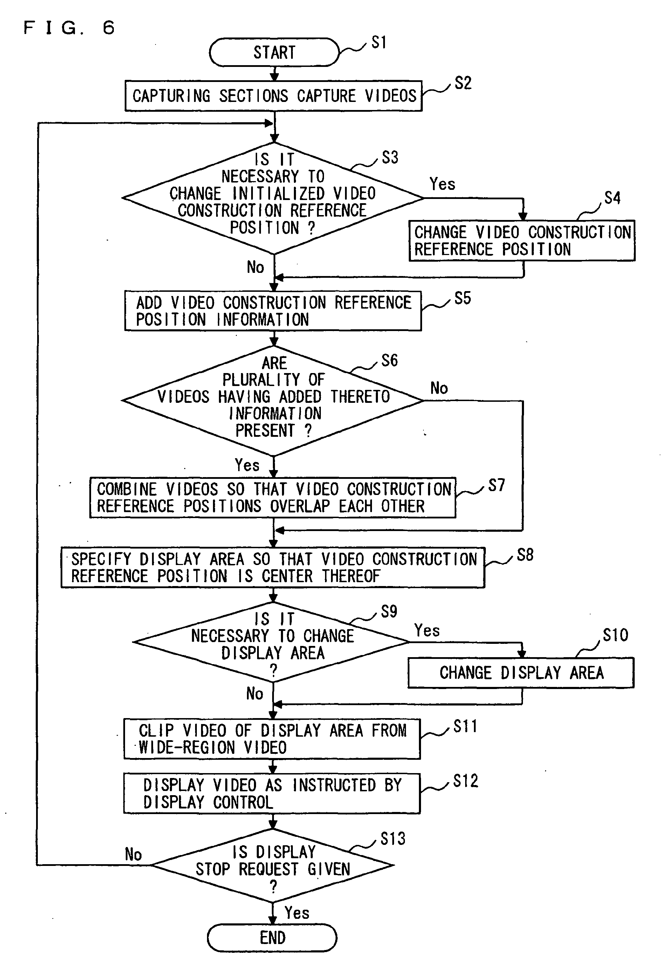

Next, the flow of the operation of the video display apparatus according to the present embodiment will be described by following a flow chart, also with reference to FIG. 1. FIG. 6 is a flow chart showing the operation of the video display apparatus according to the first embodiment of the present invention. In step S1, the process starts. In step S2, the capturing sections 101a - 101n start capturing the periphery of the vehicle 201. In step S3, the reference position setting sections 102a - 102n determine whether or not it is necessary to change an initialized video construction reference position. As a result of the determination, when it is necessary to change the initialized video construction reference position ("Yes"), the control proceeds to step S4 and a new video construction reference position is set in accordance with the change instruction. After the video construction reference position is changed in step S4, the control proceeds to step S5. As a result of the determination, when it is not necessary to change the initialized video construction reference position ("No"), the control proceeds to step S5.

In step S5, the video construction reference position information adding sections 103a - 103n add information regarding the video construction reference position, set by the reference position setting sections 102a - 102n, to all of the videos received from the capturing sections 101a - 101n, respectively. In step S6, it is determined whether or not a plurality of the videos having added thereto the information regarding the video construction reference positions are present. When a plurality of the videos having added thereto the information regarding the video construction reference positions are present ("Yes"), the control proceeds to step S7. When a plurality of the videos having added thereto the information regarding the video construction reference positions are not present ("No"), the control proceeds to step S8.

In step S7, the video constructing section 104 combines the plurality of the videos having added thereto the information regarding the video construction reference positions so that all of the video construction reference positions overlap each other, and thus generates a wide-region video. Then, the control proceeds to step S8. In step S8, the display area specifying section 105 specifies a display area in accordance with the display monitor so that the video construction reference position on the wide-region video generated by the video constructing section 104 is the center of the display area.

In step S9, the display area specifying section 105 determines whether or not it is necessary to change the display area. As a result of the determination, when it is necessary to change the display area ("Yes"), the control proceeds to step S10. As a result of the determination, when it is not necessary to change the display area ("No"), the control proceeds to step S11.

In step S10, in accordance with the instruction to change the display area, the display area specifying section 105 specifies a new display area (i.e., changes the display area), and the control proceeds to step S11. In step S11, in accordance with the display area information specified by the display area specifying section 105, the display video generating section 106 clips a video of the display area from the wide-region video generated by the video constructing section 104.

In step S12, as instructed by the video display control section 110, the video display section 107 performs video processing, such as a flip horizontal and an image quality adjustment, on the video clipped by the display video generating section 106 and outputs the resultant video to the monitor. In step S13, the video display control section 110 determines whether or not a display stop request is given. As a result of the determination, when the display stop request is given ("Yes"), the control proceeds to step S14 and ends. As a result of the determination, when the display stop request is not given ("No"), the control returns to step S3 and the process of steps S3 through S13 is repeated.

As described above, the video display apparatus according to the first embodiment of the present invention combines the videos captured by the plurality of capturing sections 101a - 101n so that focus monitor positions in the videos overlap each other, generates a wide-region video, clips an area of the focus monitor position, and displays the clipped area of the focus monitor position on the monitor. Consequently, the video display apparatus can display on a monitor a video that is easily understandable to a user by a simple method. Further, the video display apparatus can also be applied, as a vehicle-mounted video display apparatus to be mounted on a vehicle or the like, to a driving assistance system in which blind spots are reduced. Furthermore, the video display apparatus can also be applied to the use of a security system using a monitoring camera and to the use of a video system for generating a wide-region video using a plurality of cameras.

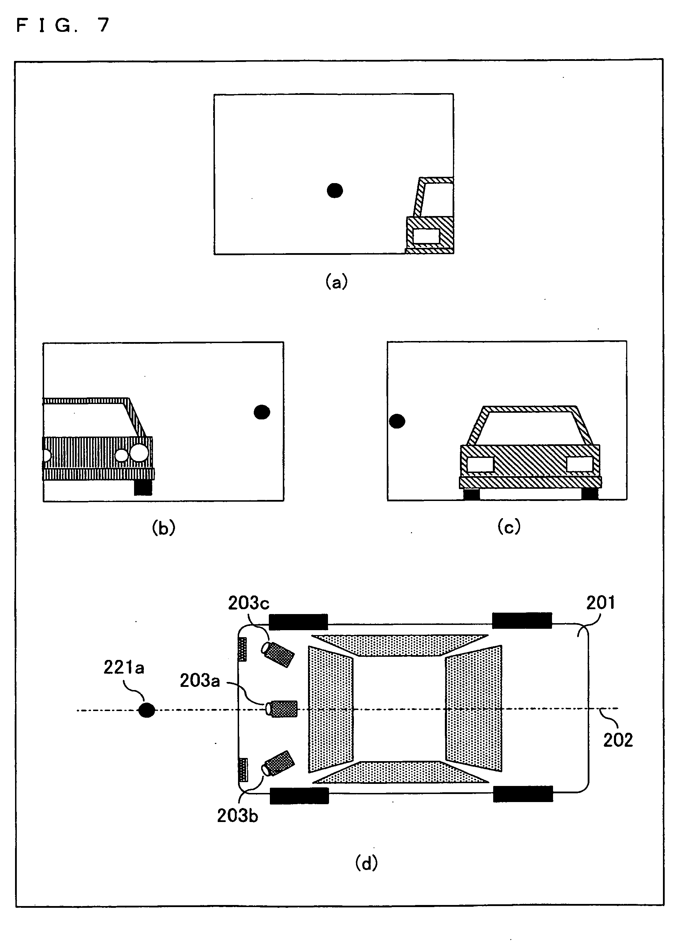

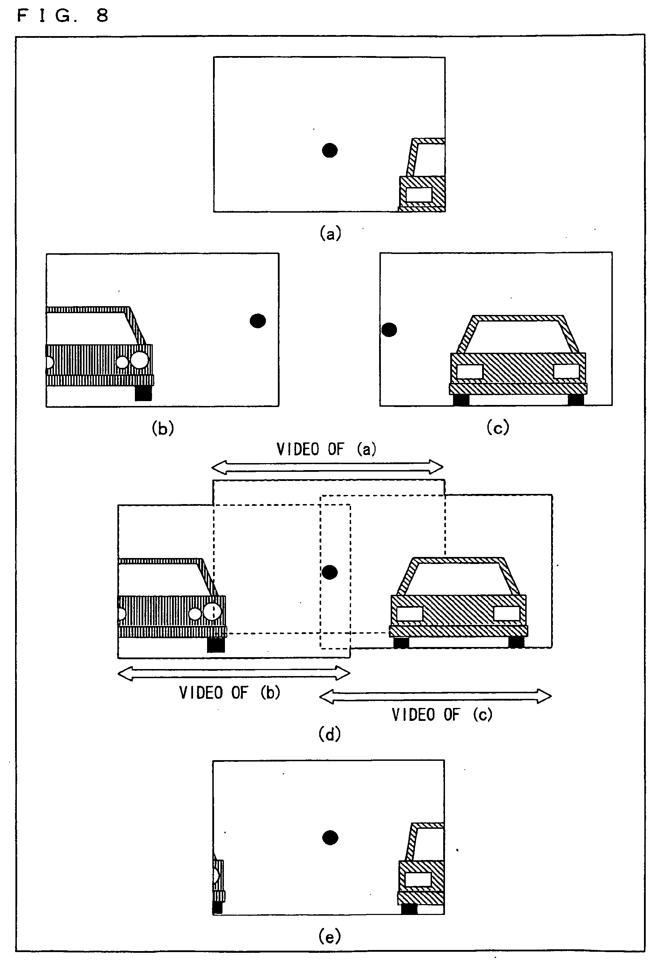

Note that FIGS. 7 and 8 show an example of the videos, obtained when the cameras 203a, 203b, and 203c are installed, that are different from those of FIGS. 3 through 5 due to the difference in the installation positions and the angles of the capturing directions of the cameras 203a, 203b, and 203c. FIGS. 7 and 8 are different from FIGS. 3 through 5 only in that the video construction reference position to be added is different due to the difference in the installation positions and the angles of the capturing directions of the cameras 203a, 203b, and 203c. Similarly to the case of FIGS. 3 through 5, also in the case of FIGS. 7 and 8, the video display apparatus can, by a simple process, generate a wide-region video based on the videos obtained from the plurality of capturing sections 101a - 101n for capturing the periphery of the vehicle, clip an area of a focus monitor position, and display the clipped area of the focus monitor position on the monitor.

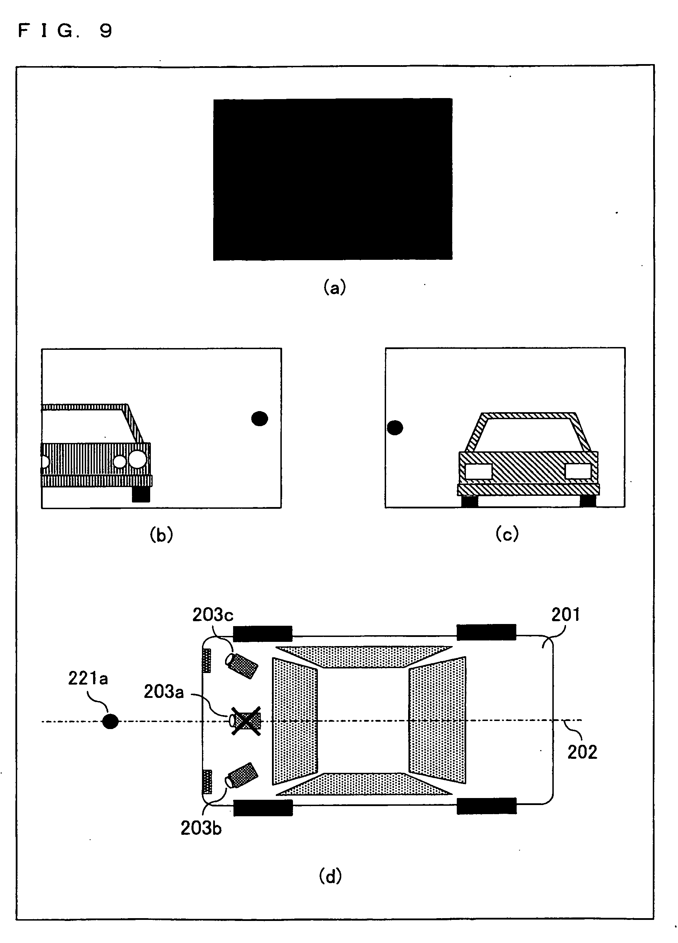

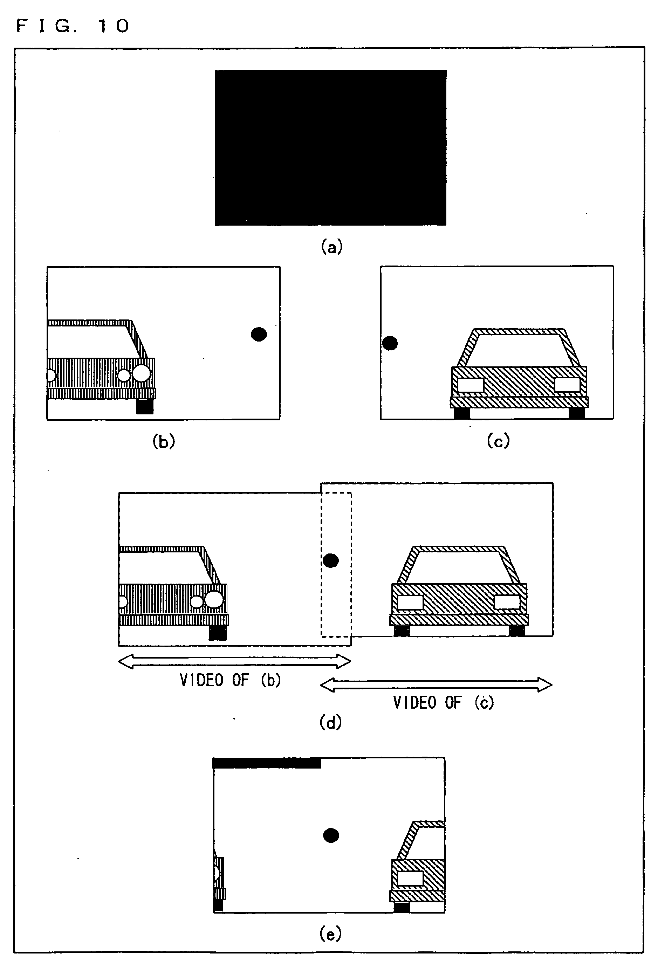

Based on the first embodiment of the present invention, even if some videos cannot be obtained when any of the cameras 203a, 203b, and 203c is broken, information regarding the video construction reference position may not be added to the capturing result from which a video cannot be obtained, whereby a display video can be obtained without changing the sequential process. FIGS. 9 and 10 show an example of the case where a video cannot be obtained when the camera 203a is broken. (a) of FIG. 9 and (a) of FIG. 10 show the state where the video of the camera 203a cannot be obtained, (b) of FIG. 9 and (b) of FIG. 10 show the video of the camera 203b, and (c) of FIG. 9 and (c) of FIG. 10 show the video of the camera 203c. (d) of FIG. 9 shows an example of the setting of the rear-monitoring cameras 203a, 203b, and 203c in the vehicle 201. In this case, the video constructing section 104 combines the videos of the camera 203b and the camera 203c and thus generates a wide-region video as shown in (d) of FIG. 10. In accordance with the display area information specified by the display area specifying section 105, the display video generating section 106 clips a video of the display area from the wide-region video generated by the video constructing section 104 and thus generates a video as shown in (e) of FIG. 10.

### (Second Embodiment)

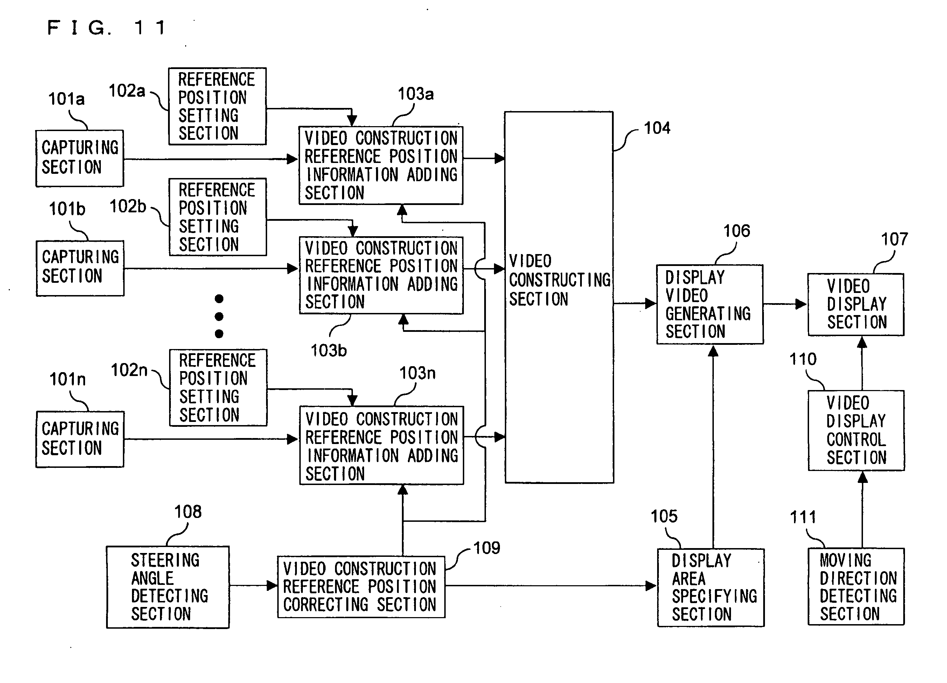

FIG. 11 is a block diagram showing the structure of a video display apparatus according to a second embodiment of the present invention. In FIG. 11, the same components as those of FIG. 1 will be denoted by the same reference numerals and will not be described. The video display apparatus according to the present embodiment is different from the video display apparatus according to the first embodiment in that the video display apparatus according to the present embodiment further includes a steering angle detecting section 108 and a video construction reference position correcting section 109. The steering angle detecting section 108 detects a steering angle when the driver steers. In accordance with the steering angle detected by the steering angle detecting section 108, the video construction reference position correcting section 109 corrects the video construction reference position set by the reference position setting sections 102a - 102n.

The video display apparatus according to the present embodiment will be described in detail below.

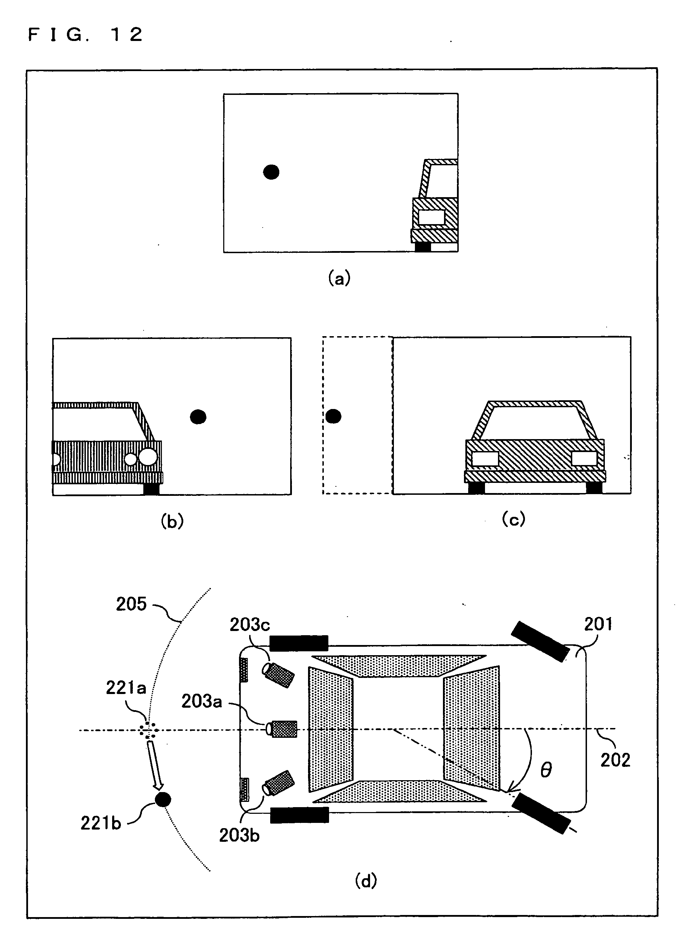

FIG. 12 is a diagram showing the relations between: the installation conditions of the rear-monitoring cameras 203a, 203b, and 203c in the vehicle 201 and the steering angle; and the videos obtained from the respective cameras. (a), (b), and (c) of FIG. 12 conceptually show the videos obtained by adding position information regarding video construction reference positions 221a and 221b to the videos captured by the respective cameras. (a) of FIG. 12 shows the video of the camera 203a, (b) of FIG. 12 shows the video of the camera 203b, and (c) of FIG. 12 shows the video of the camera 203c. (d) of FIG. 12 shows an example of the setting of the rear-monitoring cameras 203a, 203b, and 203c in the vehicle 201.

The example of FIG. 12 shows an example of the case where a steering angle "θ" occurs when the driver steers in the case where the video construction reference position 221a is set when the steering angle is "0". Similarly to the first embodiment, the video construction reference position when the steering angle is "0" (i.e., the video construction reference position in an initial state) is set at any position on the steering reference line 202. Note that although filled circles represent the video construction reference position in the figures, not filled circles but coordinate information corresponding to filled circles is added to the actual videos.

Referring to (d) of FIG. 12, when the steering angle θ occurs, the steering angle detecting section 108 detects the steering angle θ and outputs the information obtained by the detection to the video construction reference position correcting section 109. In accordance with the steering angle θ detected by the steering angle detecting section 108, the video construction reference position correcting section 109 corrects the video construction reference position 221a to the new video construction reference position 221b. That is, in accordance with the steering angle θ caused by the driver's operation, the video construction reference position is corrected. The video construction reference position information adding sections 103a - 103n add information regarding the video construction reference position 221b, obtained by the correction of the video construction reference position correcting section 109, to all of the videos.

Note that (c) of FIG. 12 shows the case where, due to the occurrence of the steering angle θ, the video construction reference position 221b is positioned outside the video obtained from the camera 203c. In this case, the video construction reference position information adding section 103c adds the video construction reference position 221b to the video obtained from the camera 203c, assuming that the video construction reference position 221b is present outside the video obtained from the camera 203c.

The video construction reference position correcting section 109 can easily correct a position by correcting the video construction reference position to another position on a predetermined changing line 205 in accordance with the steering angle θ. The predetermined changing line 205 can be arbitrarily determined based on the installation positions of the capturing sections 101a - 101n and an assumed viewpoint of the driver. Further, as the predetermined changing line 205, for example, a portion of an arc (including an ellipse) with a predetermined radius from a point on the steering reference line 202 may be used.

In the flow chart of FIG. 6, the video display apparatus according to the second embodiment is different in operation from the video display apparatus according to the first embodiment in that, in step S3, the video display apparatus according to the second embodiment adds the information regarding the steering angle, detected by the steering angle detecting section 108, as a determination factor to the determination of whether or not it is necessary to change an initialized video construction reference position, and in step S4, the video display apparatus according to the second embodiment changes the video construction reference position.

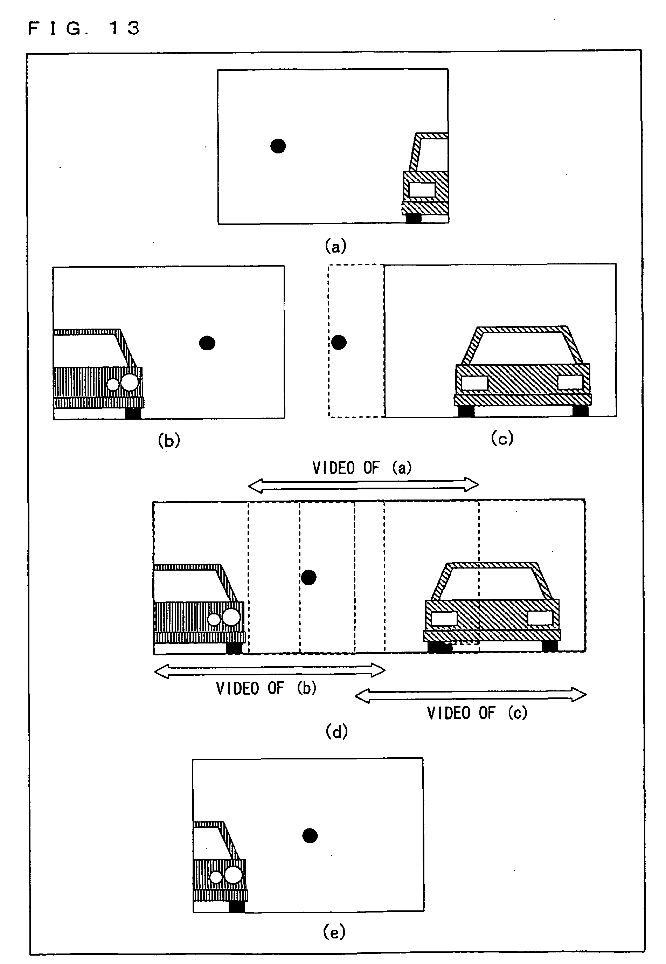

The video constructing section 104 combines all of the videos captured by the capturing sections 101a - 101n so that the video construction reference positions added by the video construction reference position information adding sections 103a - 103n overlap each other, and thus generates a wide-region video. FIG. 13 is a diagram illustrating a method of combining all of the videos obtained from the cameras 203a, 203b, and 203c. (a), (b), and (c) of FIG. 13 are the same as (a), (b), and (c) of FIG. 12, respectively. The video constructing section 104 combines the plurality of these videos so that the video construction reference positions added to the plurality of these videos overlap each other. (d) of FIG. 13 shows the combined video, from which the wide-region video can be obtained. By a similar process to that of the first embodiment, the display video generating section 106 clips a video of a display area from the wide-region video obtained by the combination of the video constructing section 104 and thus generates a video as shown in (e) of FIG. 13.

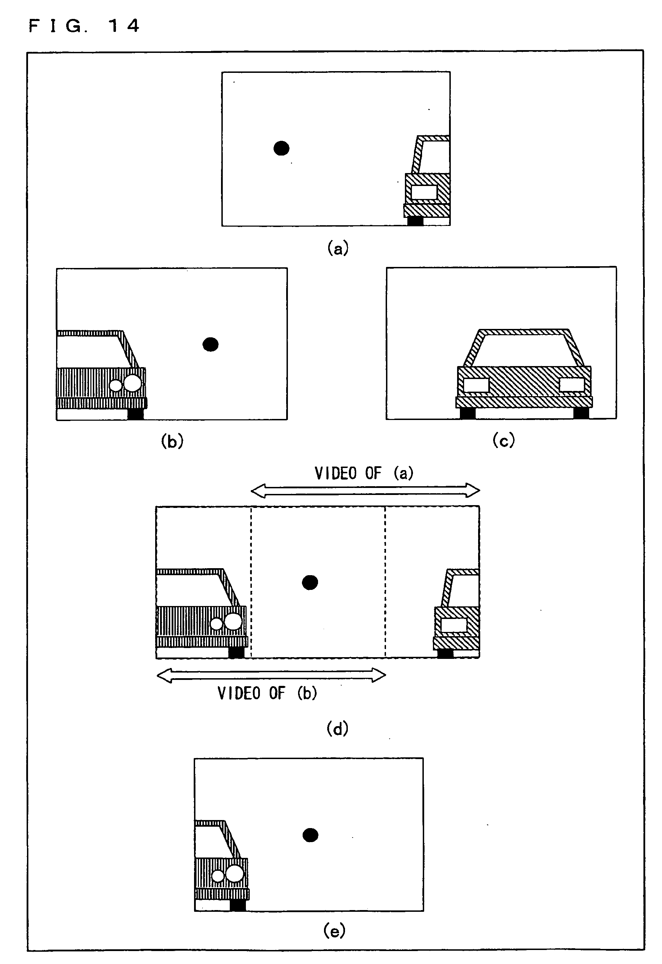

Note that, to combine all of the videos captured by the capturing sections 101a - 101n, the video display apparatus may use a method different from the method of combining the videos as described in FIG. 13. This different method is shown in FIG. 14. In the method shown in FIG. 13, when the video construction reference position 221b is present outside the video obtained from the camera 203c, it is assumed that the video construction reference position 221b is present outside the video. In the method shown in FIG. 14, however, it is assumed that the video construction reference position 221b is absent within the video obtained from the camera 203c. (a) and (b) of FIG. 14 are the same as (a) and (b) of FIG. 13, respectively.

(c) of FIG. 14 shows a video in the case of assuming that the video construction reference position 221b is absent within the video obtained from the camera 203c. In this case, the video construction reference position information adding section 103c does not add the video construction reference position 221b to the video obtained from the camera 203c, assuming that the video construction reference position 221b is absent within the video obtained from the camera 203c. That is, when combining the videos, the video constructing section 104 uses only the videos having added thereto the video construction reference positions 221b, and therefore the wide-region video generated by the video constructing section 104 is a video combined using the camera 203a and the camera 203b as shown in (d) of FIG. 14. By a similar process to that of the first embodiment, the display video generating section 106 clips a video of a display area from the wide-region video obtained by the combination of the video constructing section 104 and thus generates a video as shown in (e) of FIG. 14. The other operations of the video display apparatus according to the present embodiment are similar to those of the video display apparatus according to the first embodiment of the present invention, and therefore will not be described.

As described above, the video display apparatus according to the second embodiment of the present invention may change the video construction reference position in accordance with the steering angle of the moving device, whereby, as well as the effects described in the first embodiment, it is possible to display a video adapted for the driver's steering to the driver in an easily understandable manner and thus reduce the blind spots of the driver.

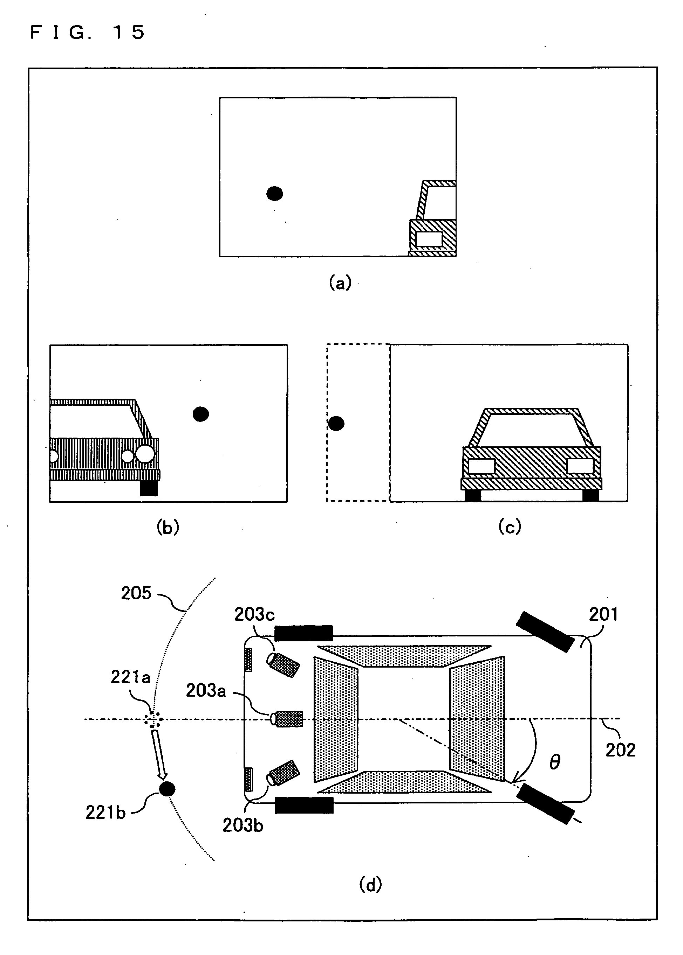

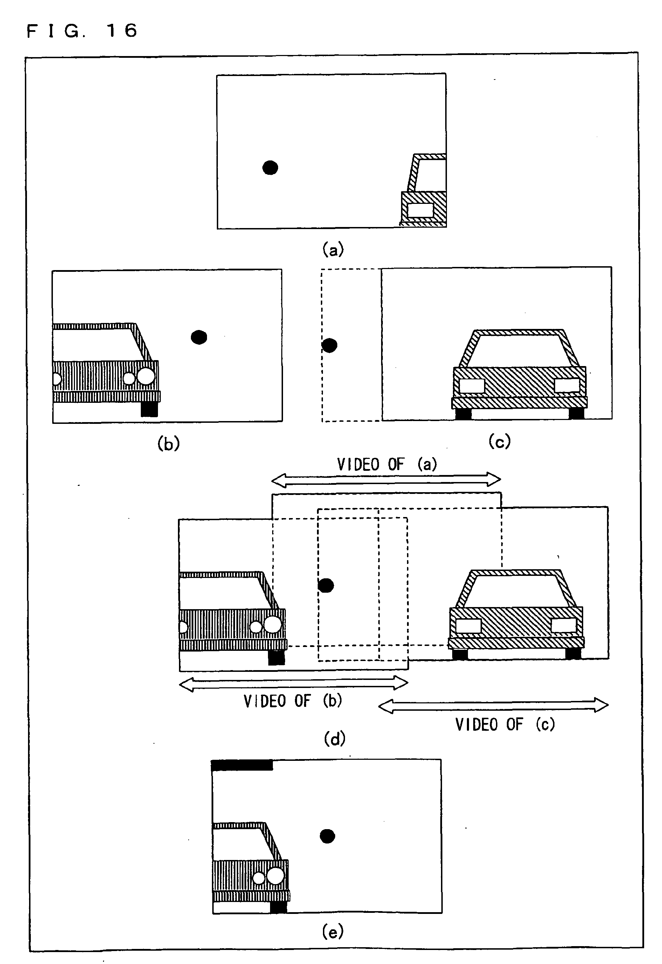

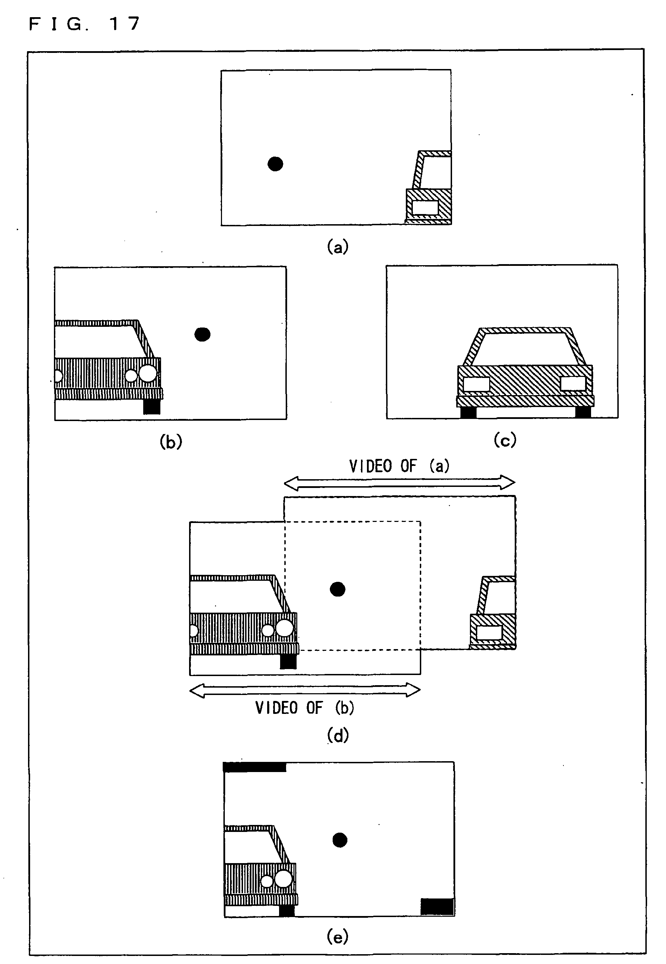

Note that FIGS. 15 and 16 show an example of the videos, obtained when the cameras 203a, 203b, and 203c are installed, that are different from those of FIGS. 12 and 13 due to the difference in the installation positions and the angles of the capturing directions of the cameras 203a, 203b, and 203c. Similarly, FIG. 17 shows an example of the videos different from those of FIG. 14. FIGS. 15, 16, and 17 are different from FIGS. 12, 13, and 14 only in that the video construction reference position to be added is different due to the difference in the installation positions and the angles of the capturing directions of the cameras 203a, 203b, and 203c. Similarly to the case of FIGS. 12, 13, and 14, also in the case of FIGS. 15, 16, and 17, the video display apparatus can, by a simple process, generate a wide-region video based on the videos obtained from the plurality of capturing sections 101a - 101n for capturing the periphery of the vehicle, clip an area of a focus monitor position, and display the clipped area of the focus monitor position on the monitor.

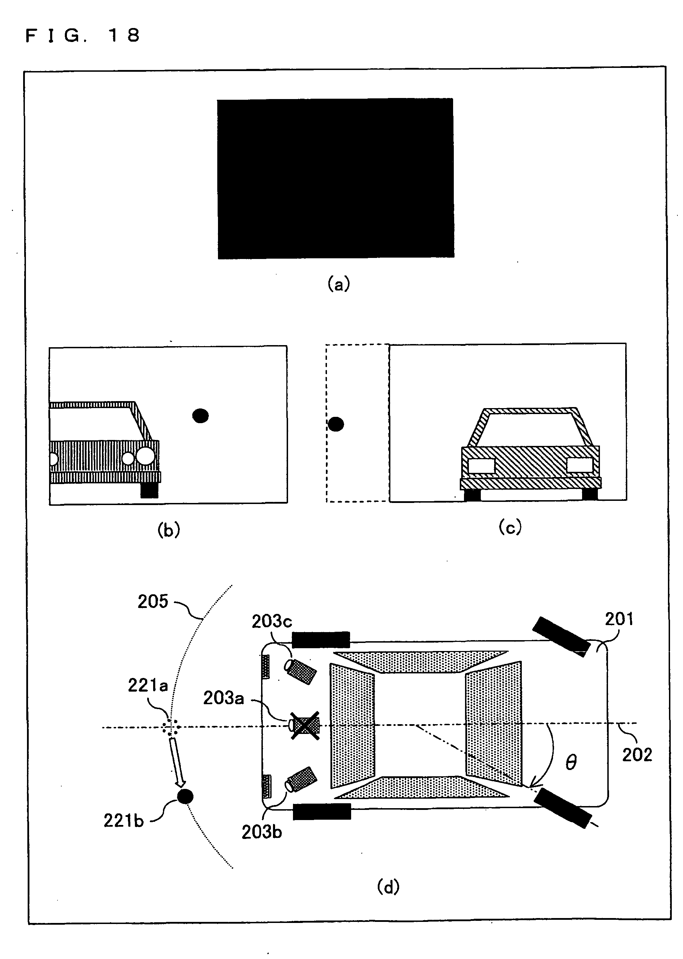

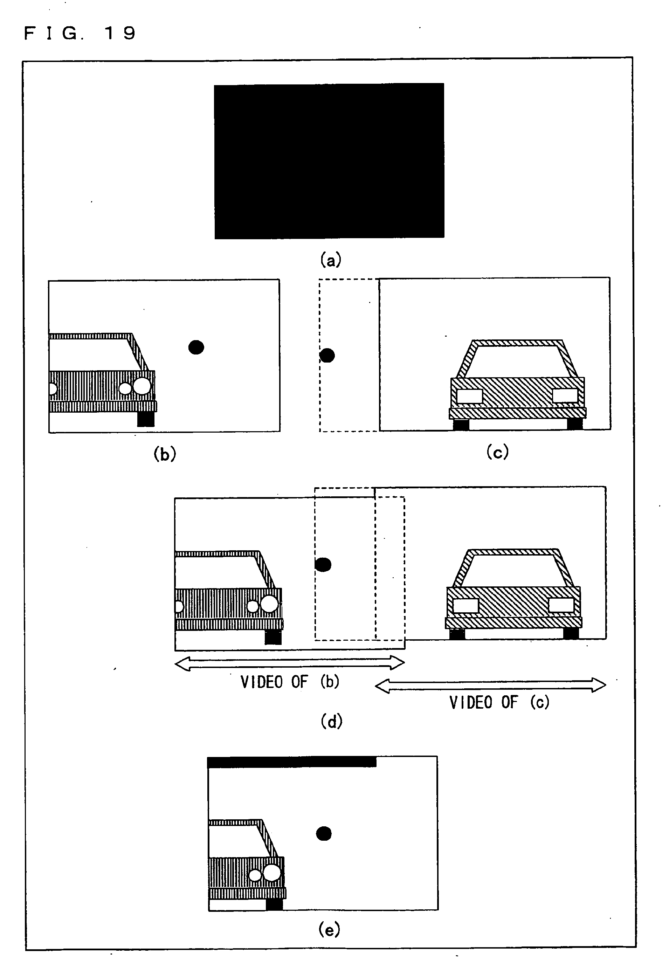

Based on the second embodiment of the present invention, even if some videos cannot be obtained when any of the cameras 203a, 203b, and 203c is broken, information regarding the video construction reference position may not be added to the capturing result from which a video cannot be obtained, whereby a display video can be obtained without changing the sequential process. FIGS. 18 and 19 show an example of the case where a video cannot be obtained when the camera 203a is broken. (a) of FIG. 18 and (a) of FIG. 19 show the state where the video of the camera 203a cannot be obtained, (b) of FIG. 18 and (b) of FIG. 19 show the video of the camera 203b, and (c) of FIG. 18 and (c) of FIG. 19 show the video of the camera 203c. (d) of FIG. 18 shows an example of the setting of the rear-monitoring cameras 203a, 203b, and 203c in the vehicle 201. In this case, the video constructing section 104 combines the videos of the camera 203b and the camera 203c and thus generates a video as shown in (d) of FIG. 19. In accordance with the display area information specified by the display area specifying section 105, the display video generating section 106 clips a video of the display area from the wide-region video obtained by the combination of the video constructing section 104 and thus generates a video as shown in (e) of FIG. 19.

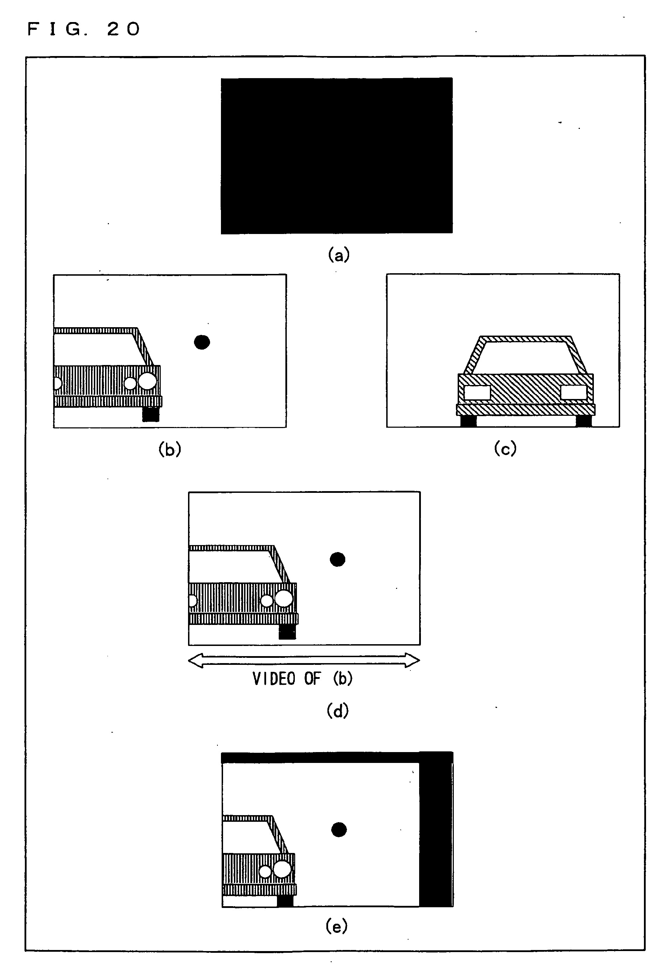

Similarly, also in the case of FIG. 20, the video constructing section 104 generates a video as shown in (d) of FIG. 20 from the video of the camera 203b shown in (b) of FIG. 20, assuming that the video construction reference position 221b is absent within the video obtained from the camera 203c. In accordance with the display area information specified by the display area specifying section 105, the display video generating section 106 clips a video of the display area from the wide-region video obtained by the combination of the video constructing section 104 and thus generates a video as shown in (e) of FIG. 20.

Note that in the present embodiment, the video construction reference position correcting section 109 is provided for correcting the video construction reference position in accordance with the steering angle detected by the steering angle detecting section 108, but the function of the video construction reference position correcting section 109 may be integrated into the reference position setting sections 102a - 102n.

The operations performed by the video display apparatuses according to the first and second embodiments described above may each be provided as a program capable of being executed by a CPU (Central Processing Unit). The program can be stored in a memory such as a DRAM and a flash memory, and a storage medium such as an HD (Hard Disk) and a DVD (Digital Versatile Disk).

### INDUSTRIAL APPLICABILITY

The video display apparatus according to the present invention is useful for a vehicle-mounted video display apparatus in a vehicle or the like.

## Claims

1. A video display apparatus for displaying on a monitor (2203) videos captured using a plurality of capturing sections (101a, 101b, 101c), comprising:
one or more reference position setting sections (102a, 102b, 102c) for setting a position as a video construction reference position (220a, 220b, 221a, 221b);
one or more video construction reference position information adding sections (103a, 103b, 103c) for adding information regarding the video construction reference position (220a, 220b, 221a, 221b), set by the reference position setting sections (102a, 102b, 102c), to the videos captured by the plurality of capturing sections (101a, 101b, 101c);
a video constructing section (104) for combining the videos captured by the plurality of capturing sections (101a, 101b, 101c) so that the video construction reference positions (220a, 220b, 221a, 221b) added by the video construction reference position information adding sections (103a, 103b, 103c) overlap each other, and for thus generating a wide-range video;
a display area specifying section (105) for specifying a display area, for display on the monitor (2203), from the wide-range video generated by the video constructing section (104); and
a display video generating section (106) for clipping a video of the display area, specified by the display area specifying section (105), from the wide-range video generated by the video constructing section (104) and outputting the clipped video to the monitor (2203) for display.

2. The video display apparatus according to claim 1,
wherein the wide-range video is a video capturing a wider range than a range of the video captured using any one capturing section (101a, 101b, 101c) of the plurality of capturing sections (101a, 101b, 101c).

3. The video display apparatus according to claim 1 or 2,
wherein the display area specifying section (105) specifies the display area, for display on the monitor (2203), from the wide-range video so that the video construction reference position (220a, 220b, 221a, 221b) added to the wide-range video is a center of the display area.

4. The video display apparatus according to any of claims 1 through 3, further comprising:
a steering angle detecting section (108) for detecting a steering angle of a moving device,
wherein the reference position setting sections (102a, 102b, 102c) change the video construction reference position (220a, 220b, 221a, 221b) in accordance with the steering angle of the moving device detected by the steering angle detecting section (108).

5. The video display apparatus according to any of claims 1 through 4,
wherein, when combining the videos captured by the capturing sections (101a, 101b, 101c), the video constructing section (104) combines the videos captured by the capturing sections (101a, 101b, 101c) so that the closer the video construction reference position (220a, 220b, 221a, 221b) added to the video is to a center of the video, the higher is a layer of the video.

6. The video display apparatus according to any of claims 1 through 5,
wherein the video construction reference position (220a, 220b, 221a, 221b) is set as a focus monitor position determined based on installation conditions of the capturing sections (101a, 101b, 101c) and an assumed viewpoint for viewing the videos captured by the capturing sections(101a, 101b, 101c).

7. The video display apparatus according to any of claims 1 through 5,
wherein the video construction reference position (220a, 220b, 221a, 221b) is arbitrarily determined by an operator of the moving device with reference to the video outputted to the monitor (2203) by the display video generating section (106).

8. A video display method of displaying on a monitor (2203) videos captured using a plurality of capturing sections (101a, 101b, 101c), comprising:
a step of setting a position as a video construction reference position (220a, 220b, 221a, 221b);
a step of adding information regarding the video construction reference position (220a, 220b, 221a, 221b) to the videos captured by the plurality of capturing sections (101a, 101b, 101c);
a step of combining the videos captured by the plurality of capturing sections (101a, 101b, 101c) so that the added video construction reference positions (220a, 220b, 221a, 221b) overlap each other, and of thus generating a wide-range video;
a step of specifying a display area, for display on the monitor (2203), from the generated wide-range video; and
a step of clipping a video of the specified display area from the wide-range video and outputting the clipped video to the monitor (2203) for display.

9. A storage medium having stored therein a program for displaying on a monitor (2203) videos captured using a plurality of capturing sections (101a, 101b, 101c), the program comprising:
a step of setting a position as a video construction reference position (220a, 220b, 221a, 221b);
a step of adding information regarding the video construction reference position (220a, 220b, 221a, 221b) to the videos captured by the plurality of capturing sections (101a, 101b, 101c);
a step of combining the videos captured by the plurality of capturing sections (101a, 101b, 101c) so that the added video construction reference positions (220a, 220b, 221a, 221b) overlap each other, and of thus generating a wide-range video;
a step of specifying a display area, for display on the monitor (2203), from the generated wide-range video; and
a step of clipping a video of the specified display area from the wide-range video and outputting the clipped video to the monitor (2203) for display.

## Patentansprüche

1. Videowiedergabegerät zur Wiedergabe von Videos, welche unter der Verwendung einer Mehrzahl von Aufnahmeabschnitten (101a, 101b, 101c) aufgenommen sind, auf einem Monitor (2203), umfassend:
einen oder mehrere Referenzpositionseinstellabschnitte (102a, 102b, 102c) zum Einstellen einer Position als eine Videoaufbaureferenzposition (220a, 220b, 221a, 221b);
einen oder mehrere Videoaufbaureferenzpositionsinformationshinzufügeabschnitte (103a, 103b, 103c) zum Hinzufügen von Informationen im Bezug auf die durch die Referenzpositionseinstellabschnitte (102a, 102b, 102c) eingestellte Videoaufbaureferenzposition (220a, 220b, 221a, 221b) zu den Videos, welche durch die Mehrzahl von Aufnahmeabschnitten (101a, 101b, 101c) aufgenommen sind;
einen Videoaufbauabschnitt (104) zum Kombinieren der durch die Mehrzahl von Aufnahmeabschnitten (101a, 101b, 101c) aufgenommenen Videos, so dass die Videoaufbaureferenzpositionen (220a, 220b, 221a, 221b), welche durch die Videoaufbaureferenzpositionsinformationshinzufügeabschnitte (103a, 103b, 103c) hinzugefügt sind, miteinander überlappen, und somit zum Erzeugen eines Breitbandvideos;
einen Wiedergabegebietspezifizierabschnitt (105) zum Spezifizieren eines Wiedergabegebiets aus dem durch den Videoaufbauabschnitt (104) erzeugten Breitbandvideo zur Wiedergabe auf dem Monitor (2203); und
einen Wiedergabevideoerzeugungsabschnitt (106) zum Abtrennen eines Videos des Wiedergabegebiets, welches durch den Wiedergabegebietspezifizierabschnitt (105) spezifiziert ist, vom durch den Videoaufbauabschnitt (104) erzeugten Breitbandvideo und zum Ausgeben des abgetrennten Videos an den Monitor (2203) zur Wiedergabe.

2. Videowiedergabegerät nach Anspruch 1,
wobei das Breitbandvideo ein Video ist, welches einen breiteren Bereich als einen Bereich des unter der Verwendung eines beliebigen Aufnahmeabschnitts (101a, 101b, 101c) der Mehrzahl von Aufnahmeabschnitten (101a, 101b, 101c) aufgenommenen Videos aufnimmt.

3. Videowiedergabegerät nach Anspruch 1 oder 2,
wobei der Wiedergabegebietspezifizierabschnitt (105) das Wiedergabegebiet zur Wiedergabe auf dem Monitor (2203) aus dem Breitbandvideo spezifiziert, so dass die Videoaufbaureferenzposition (220a, 220b, 221a, 221b), welche dem Breitbandvideo hinzugefügt ist, ein Zentrum des Wiedergabegebiets ist.

4. Videowiedergabegerät nach einem der Ansprüche 1 bis 3, weiterhin umfassend:
einen Steuerwinkelerfassungsabschnitt (108) zum Erfassen eines Steuerwinkels einer sich bewegenden Vorrichtung,
wobei die Referenzpositionseinstellabschnitte (102a, 102b, 102c) die Videoaufbaureferenzposition (220a, 220b, 221a, 221b) in Übereinstimmung mit dem Steuerwinkel der sich bewegenden Vorrichtung ändern, welcher durch den Steuerwinkelerfassungsabschnitt (108) erfasst ist.

5. Videowiedergabegerät nach einem der Ansprüche 1 bis 4,
wobei der Videoaufbauabschnitt (104) beim Kombinieren der durch die Aufnahmeabschnitte (101a, 101b, 101c) aufgenommenen Videos die durch die Aufnahmeabschnitte (101a, 101b, 101c) aufgenommenen Videos derart kombiniert, dass je näher die Videoaufbaureferenzposition (220a, 220b, 221a, 221b), welche dem Video hinzugefügt ist, zum Zentrum des Videos liegt, desto höher eine Ebene des Videos ist.

6. Videowiedergabegerät nach einem der Ansprüche 1 bis 5,
wobei die Videoaufbaureferenzposition (220a, 220b, 221a, 221b) als eine Fokusmonitorposition eingestellt ist, welche auf der Grundlage von Installationsbedingungen der Aufnahmeabschnitte (101a, 101b, 101c) und eines angenommenen Standpunkts zum Betrachten des durch die Aufnahmeabschnitte (101a, 101b, 101c) aufgenommenen Videos bestimmt ist.

7. Videowiedergabegerät nach einem der Ansprüche 1 bis 5,
wobei die Videoaufbaureferenzposition (220a, 220b, 221a, 221b) willkürlich durch einen Operator der beweglichen Vorrichtung in Bezug auf das Video bestimmt wird, welches an den Monitor (2203) durch den Anzeigevideoerzeugungsabschnitt (106) ausgegeben wird.

8. Videowiedergabeverfahren zum Wiedergeben von unter der Verwendung einer Mehrzahl von Aufnahmeabschnitten (101a, 101b, 101c) aufgenommenen Videos auf einem Monitor (2203), umfassend:
einen Schritt des Einstellens einer Position als eine Videoaufbaureferenzposition (220a, 220b, 221a, 221b);
einen Schritt des Hinzufügens von Informationen in Bezug auf die Videoaufbaureferenzposition (220a, 220b, 221a, 221b) an die durch die Mehrzahl von Aufnahmeabschnitten (101a, 101b, 101c) aufgenommenen Videos;
einen Schritt des Kombinierens der durch die Mehrzahl von Aufnahmeabschnitten (101a, 101b, 101c) aufgenommenen Videos, so dass die hinzugefügten Videoaufbaureferenzpositionen (220a, 220b, 221a, 221b) miteinander überlappen, und damit des Erzeugens eines Breitbandvideos;
einen Schritt des Spezifizierens eines Wiedergabegebiets aus dem erzeugten Breitbandvideo zur Wiedergabe auf dem Monitor (2203); und
einen Schritt des Abtrennens eines Videos des spezifizierten Wiedergabegebiets vom Breitbandvideo und des Ausgebens des abgetrennten Videos an den Monitor (2203) zur Wiedergabe.

9. Speichermedium mit einem darin gespeicherten Programm zum Wiedergeben von unter der Verwendung einer Mehrzahl von Aufnahmeabschnitten (101a, 101b, 101c) aufgenommenen Videos auf einem Monitor (2203), wobei das Programm umfasst:
einen Schritt des Einstellens einer Position als eine Videoaufbaureferenzposition (220a, 220b, 221a, 221b);
einen Schritt des Hinzufügens von Informationen in Bezug auf die Videoaufbaureferenzposition (220a, 220b, 221a, 221b) an die durch die Mehrzahl von Aufnahmeabschnitten (101a, 101b, 101c) aufgenommenen Videos;
einen Schritt des Kombinierens der durch die Mehrzahl von Aufnahmeabschnitten (101a, 101b, 101c) aufgenommenen Videos, so dass die hinzugefügten Videoaufbaureferenzpositionen (220a, 220b, 221a, 221b) miteinander überlappen, und damit des Erzeugens eines Breitbandvideos;
einen Schritt des Spezifizierens eines Wiedergabegebiets aus dem erzeugten Breitbandvideo zur Wiedergabe auf dem Monitor (2203); und
einen Schritt des Abtrennens eines Videos des spezifizierten Wiedergabegebiets vom Breitbandvideo und des Ausgebens des abgetrennten Videos an den Monitor (2203) zur Wiedergabe.

## Revendications

1. Appareil d'affichage vidéo permettant d'afficher sur un moniteur (2203) des vidéos capturées en utilisant une pluralité de sections de capture (101a, 101b, 101c), comprenant:
une ou plusieurs sections (102a, 102b, 102c) de fixation de position de référence pour fixer une position comme position de référence (220a, 220b, 221a, 221b) de construction de vidéo;
une ou plusieurs sections (103a, 103b, 103c) d'ajout d'informations de position de référence de construction de vidéo pour ajouter des informations concernant la position de référence (220a, 220b, 221a, 221b) de construction de vidéo, fixée par les sections (102a, 102b, 102c) de fixation de position de référence, aux vidéos capturées par la pluralité de sections de capture (101a, 101b, 101c);
une section (104) de construction de vidéo pour combiner les vidéos capturées par la pluralité de sections de capture (101a, 101b, 101c) de sorte que les positions de référence (220a, 220b, 221a, 221b) de construction de vidéo ajoutées par les sections (103a, 103b, 103c) d'ajout d'informations de position de référence de construction de vidéo se chevauchent, et pour générer par conséquent une vidéo à large zone;
une section (105) de spécification de zone d'affichage pour spécifier une zone d'affichage, à afficher sur le moniteur (2203), à partir de la vidéo à large plage générée par la section (104) de construction de vidéo; et
une section (106) de génération de vidéo à afficher pour découper une vidéo de la zone d'affichage, spécifiée par la section (105) de spécification de zone d'affichage, à partir de la vidéo à large plage générée par la section (104) de construction de vidéo et pour délivrer en sortie la vidéo découpée au moniteur (2203) pour l'afficher.

2. Appareil d'affichage vidéo selon la revendication 1, dans lequel la vidéo à large plage est une vidéo capturant une plage plus grande qu'une plage de la vidéo capturée en utilisant une section de capture (101a, 101b, 101c) quelconque de la pluralité de sections de capture (101a, 101b, 101c).

3. Appareil d'affichage vidéo selon la revendication 1 ou 2,
dans lequel la section (105) de spécification de zone d'affichage spécifie la zone d'affichage, à afficher sur le moniteur (2203), à partir de la vidéo à large plage de sorte que la position de référence (220a, 220b, 221a, 221b) de construction de vidéo ajoutée à la vidéo à large plage soit un centre de la zone d'affichage.

4. Appareil d'affichage vidéo selon l'une des revendications 1 à 3, comprenant en outre:
une section (108) de détection d'angle de direction pour détecter un angle de direction d'un dispositif mobile,
dans lequel les sections (102a, 102b, 102c) de fixation de position de référence modifient la position de référence (220a, 220b, 221a, 221b) de construction de vidéo selon l'angle de direction du dispositif mobile détecté par la section (108) de détection d'angle de direction.

5. Appareil d'affichage vidéo selon l'une des revendications 1 à 4,
dans lequel, lors de la combinaison des vidéos capturées par les sections de capture (101a, 101b, 101c), la section (104) de construction de vidéo combine les vidéos capturées par les sections de capture (101a, 101b, 101c) de sorte que, plus la position de référence (220a, 220b, 221a, 221b) de construction de vidéo ajoutée à la vidéo soit proche d'un centre de la vidéo, plus une couche de la vidéo soit élevée.

6. Appareil d'affichage vidéo selon l'une des revendications 1 à 5,
dans lequel la position de référence (220a, 220b, 221a, 221b) de construction de vidéo est fixée comme position à surveiller de manière ciblée déterminée sur la base des conditions d'installation des sections de capture (101a, 101b, 101c) et d'un point de vue pris pour visualiser les vidéos capturées par les sections de capture (101a, 101b, 101c).

7. Appareil d'affichage vidéo selon l'une des revendications 1 à 5,
dans lequel la position de référence (220a, 220b, 221a, 221b) de construction de vidéo est déterminée arbitrairement par un opérateur du dispositif mobile en se référant à la vidéo délivrée en sortie au moniteur (2203) par la section (106) de génération de vidéo à afficher.

8. Procédé d'affichage vidéo permettant l'affichage sur un moniteur (2203) des vidéos capturées en utilisant une pluralité de sections de capture (101a, 101b, 101c), comprenant:
une étape qui consiste à fixer une position comme position de référence (220a, 220b, 221a, 221b) de construction de vidéo;
une étape qui consiste à ajouter des informations concernant la position de référence (220a, 220b, 221a, 221b) de construction de vidéo à des vidéos capturées par la pluralité de sections de capture (101a, 101b, 101c);
une étape qui consiste à combiner des vidéos capturées par la pluralité de sections de capture (101a, 101b, 101c) de sorte que les positions de référence (220a, 220b, 221a, 221b) de construction de vidéo ajoutées se chevauchent, et à générer par conséquent une vidéo à large plage;
une étape qui consiste à spécifier une zone d'affichage, à afficher sur le moniteur (2203), à partir de la vidéo à large plage générée; et
une étape qui consiste à découper une vidéo de la zone d'affichage spécifiée à partir de la vidéo à large plage, et à délivrer en sortie la vidéo découpée au moniteur (2203) pour l'afficher.

9. Support de stockage sur lequel est stocké un programme pour afficher sur un moniteur (2203) des vidéos capturées en utilisant une pluralité de sections de capture (101a, 101b, 101c), le programme comprenant:
une étape qui consiste à fixer une position comme position de référence (220a, 220b, 221a, 221b) de construction de vidéo;
une étape qui consiste à ajouter des informations concernant la position de référence (220a, 220b, 221a, 221b) de construction de vidéo à des vidéos capturées par la pluralité de sections de capture (101a, 101b, 101c);
une étape qui consiste à combiner des vidéos capturées par la pluralité de sections de capture (101a, 101b, 101c) de sorte que les positions de référence (220a, 220b, 221a, 221b) de construction de vidéo ajoutées se chevauchent, et à générer par conséquent une vidéo à large plage;
une étape qui consiste à spécifier une zone d'affichage, à afficher sur le moniteur (2203), à partir de la vidéo à large plage générée; et
une étape qui consiste à découper une vidéo de la zone d'affichage spécifiée à partir de la vidéo à large plage, et à délivrer en sortie la vidéo découpée au moniteur (2203) pour l'afficher.
